# EUROPÄISCHE PATENTSCHRIFT

(11) **EP 0 517 172 B1**
(45) Veröffentlichungstag und Bekanntmachung des Hinweises auf die Patenterteilung: **26.04.1995**
(21) Anmeldenummer: 92109331.6
(22) Anmeldetag: 03.06.1992
(51) Int. Cl.: B67D 3/00, B67D 1/12

(54) **Schankvorrichtung zur portionierten Ausgabe von Getränken**
Dispensing device for metered quantities of beverage
Dispositif de distribution de doses de boisson

(30) Priorität: 06.06.1991 AT 1140/91
(43) Veröffentlichungstag der Anmeldung: 09.12.1992
(73) Patentinhaber: Gruber, Günther, A-6230 Brixlegg (AT)
(72) Erfinder: Gruber, Günther, A-6230 Brixlegg (AT)
(74) Vertreter: Hofinger, Engelbert, DDr.

(56) Entgegenhaltungen:
- DE-A- 2 453 960
- DE-A- 2 548 442
- DE-A- 3 140 483
- DE-C- 3 509 189
- US-A- 5 007 560

## Beschreibung

Die Erfindung betrifft eine Schankvorrichtung zur portionierten Ausgabe von Getränken aus wenigstens einer Flasche, deren Öffnung mit einer im Bereich des Flaschenhalses vormontierten Ventileinrichtung versehen ist, mit mindestens einer Flaschenhalterung zur Aufnahme einer auf den Kopf gestellten Flasche bzw. der Ventileinrichtung derselben. Weiters betrifft die Erfindung ein Schanksystem mit einer Schankvorrichtung und einer Mehrzahl von kodierbaren Ventileinrichtungen, die auf Flaschen vormontierbar sind, sowie eine Ventileinrichtung, welche für ein solches Schanksystem geeignet ist.

Zur portionierten Ausgabe von Getränken sind bereits Einrichtungen bekannt, die über die Öffnungszeit eines Ventils die ausgegebene Menge bestimmen. Bereits durch geringfügige Änderungen des Öffnungsquerschnitts bzw. der Zähigkeit der ausgegebenen Flüssigkeit kommt es dabei aber zu Ungenauigkeiten in der Ausgabe vorbestimmten Volumina. Weiters sind Durchflußmesser bekannt. Diese sind jedoch relativ aufwendig und bedürfen beim Getränkewechsel einer Reinigung (Zwischenspülung). Eine Vorrichtung der eingangs genannten Art ist beispielsweise aus der DE-C-35 09 189 bekannt.

Aufgabe der Erfindung ist es, eine Schankvorrichtung bzw. ein Schanksystem zur portionierten Ausgabe von Getränken aus einer oder mehreren wahlweise in die Schankvorrichtung einsetzbaren Flaschen zu schaffen, mit der eine rasche und präzise Ausgabe gewählter Getränkemengen möglich ist.

Dies wird bei einer Schankvorrichtung der eingangs genannten Gattung erfindungsgemäß dadurch erreicht, daß die Flaschenhalterung an eine Einrichtung zur Erfassung des Gewichts der Flasche samt enthaltenem Getränk angeschlossen ist, und daß eine mit dieser Einrichtung verbundene, elektronische Steuereinrichtung vorgesehen ist, die die Ventileinrichtung zur Ausgabe einer beispielsweise über eine Tastatur gewählten Getränkeportion aus der Flasche in Abhängigkeit vom erfaßten Gewicht bzw. von der Gewichtsänderung der Flasche samt enthaltenem Getränk steuert, wobei eine Speichereinrichtung vorgesehen ist, in die bei Feststellung einer leeren Flasche ein dem bereits ausgegebenen Getränkegewicht entsprechender Wert und gegebenenfalls ein der gewünschten Getränkemenge entsprechender Wert abgespeichert werden.

Es wurde bereits vorgeschlagen, das Gewicht der ausgegebenen Getränkemenge zu erfassen. Beim einem bekannten Vorschlag steht das unterhalb der Zapfstelle angeordnete Glas auf einer Waage und es wird so lange Flüssigkeit zugeführt bis ein vorbestimmtes Gewicht erreicht ist. Nachteilig an dieser Einrichtung ist die Tatsache, daß es durch die von oben aus der Flasche in das darunterliegende Glas strömende Flüssigkeit zu unerwünschten dynamischen Schwankungen (unruhige Flüssigkeit im Glas, von oben aus der Flasche auftreffender Flüssigkeitsstrahl) des erfaßten Gewichtes kommt, was eine genaue Zudosierung bestimmter Getränkemengen erschwert. Insbesondere bei dem im Schankbetrieb gewünschten raschen Füllen des Glases sind diese Schwierigkeiten bei der Gewichtserfassung des Glases samt Inhalt bedeutend. Außerdem ist beim Zapfen einiger Getränke günstig und üblich, das Glas während des Zapfens in der Hand, insbesondere ganz an die Zapfstelle zu halten. Während das Glas in der Hand gehalten wird, ist natürlich keine Gewichtserfassung möglich.

Es ist auch bereits bekannt, das Gewicht eines Behälters zu erfassen, aus dem die Ausgabe des Getränkes erfolgt. Eine solche Vorrichtung ist beispielsweise in der CH-A-492 205 beschrieben. Bei dieser Vorrichtung erfolgt während der Zapfung zunächst eine Füllung eines Maßbehälters mit dem Getränk aus einem Vorratsbehälter. Das Gewicht des Maßbehälters wird erfaßt, wobei der Maßbehälter so lange gefüllt wird, bis ein voreingestelltes Gewicht erreicht ist. Hierauf erfolgt die Ausgabe des Getränkes aus dem Maßbehälter in ein Glas. Die bekannte Vorrichtung eignet sich jedoch nur für eine einzige Getränkesorte und es ist im normalen Schankbetrieb nicht möglich, verschiedene Getränkemengen auszugeben. Außerdem ist es wegen der in der Aufstandsfläche des Glases vorgesehenen Schaltkontakte nicht möglich, das Glas während der Zapfung ganz an die Zapfstelle zu halten, was aber bei einigen Getränken sehr vorteilhaft ist. Weitere Vorschläge, die ebenfalls das Gewicht eines Behälters erfassen (DE-A-24 53 960 und AT-B-58 587) betreffen im wesentlichen Kontroll- und Überwachungseinrichtungen. Eine automatische dosierte Ausgabe in Abhängigkeit vom Gewicht ist dort nicht vorgesehen. Die US-A-5,007,560 zeigt eine Schankvorrichtung, bei der das Gewicht eines großen Vorratsbehälters erfaßt wird und eine gewichtsabhängige Getränkeausgabe erfolgt. Eine Ausgabe aus handelsüblichen Flaschen ist dort nicht vorgesehen.

Die erfindungsgemäße Schankvorrichtung erlaubt es, automatisch, beispielsweise über eine Tastatur ausgewählte beliebige Getränkemengen rasch und präzise auszugeben. Dabei kann das Glas ohne weiteres während der Zapfung in der Hand gehalten werden, wie dies im Schankbetrieb üblich ist. Die erfindungsgemäße Schankvorrichtung ist jedoch nicht nur in der Getränkemenge flexibler, sondern auch im Hinblick auf die Getränkesorte. Bei der erfindungsgemäßen Schankvorrichtung ist es nämlich möglich, in ein und dieselbe Flaschenhalterung wahlweise verschiedene mit jeweils einer vormontierten Ventileinrichtung versehene Originalflasche einzusetzen, aus der dann die Ausgabe einer gewünschten Getränkemenge erfolgt, wobei die elektronische Steuereinrichtung die Ventileinrichtung an der Flasche in Abhängigkeit von der erfaßten Gewichtsänderung so lange öffnet, bis das Gewicht der in der Flasche enthaltenen Getränkemenge um einen bestimmten Betrag abgenommen hat. Ein weiterer Vorteil der erfindungsgemäßen Schankanlage besteht darin, daß der Gast das ihm vertraute Bild der Originalflasche samt sehen kann, was die Akzeptanz einer elektronischen Schankanlage, insbesondere im Barbetrieb erhöht.

Weitere Vorteile und Einzelheiten der Erfindung werden an Hand der nachfolgenden Figurenbeschreibung näher beschrieben.

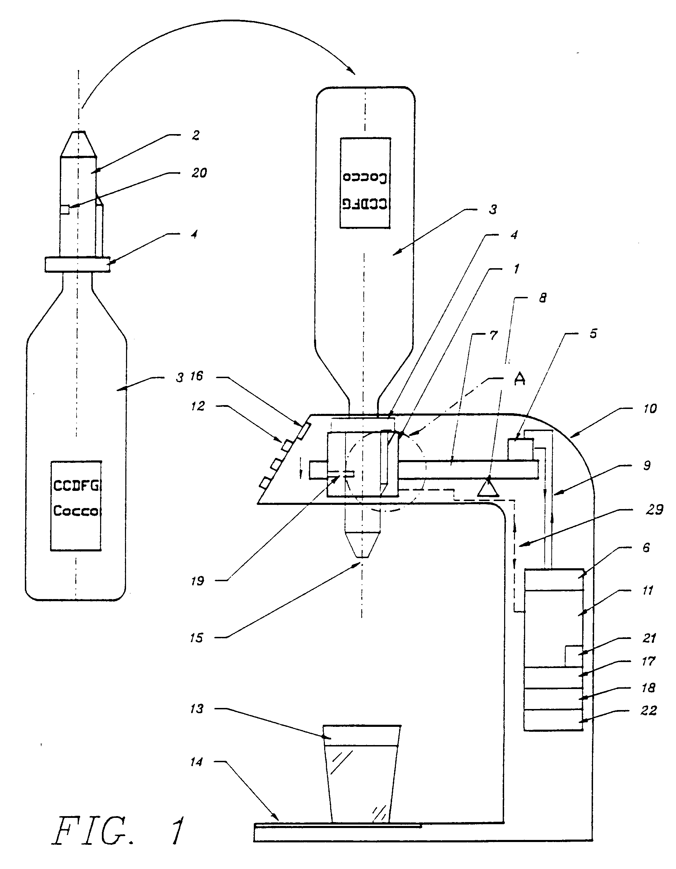

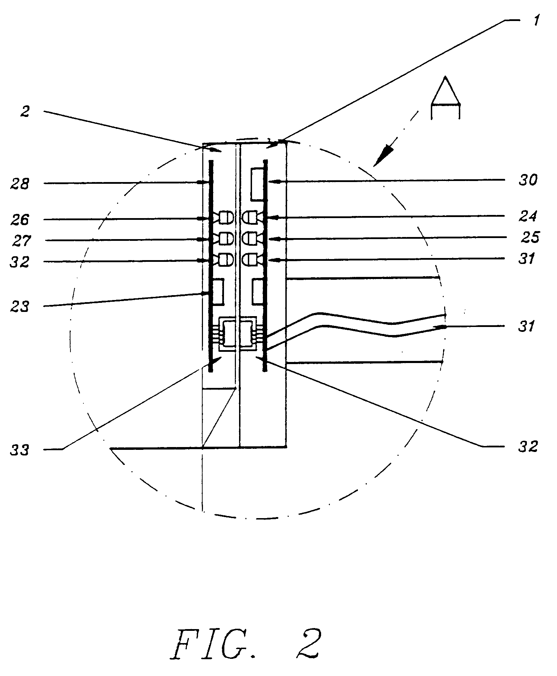

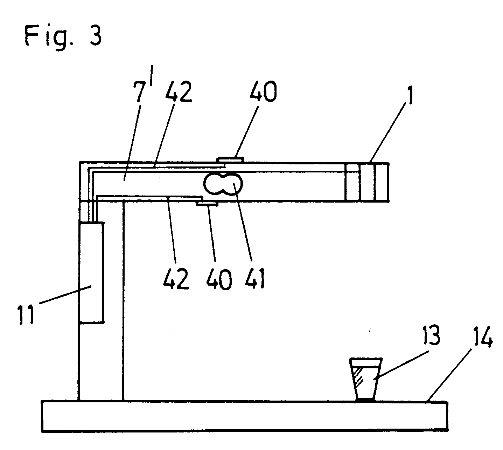

Die Fig. 1 zeigt eine schematische Seitenansicht eines Ausführungsbeispieles einer erfindungsgemäßen Schankvorrichtung mit einer Flasche, an der eine Ventileinrichtung vormontiert ist, wobei diese Flasche vor und nach dem Einsetzen in die Flaschenhalterung dargestellt ist. Die Fig. 2 zeigt eine Detaildarstellung des Bereiches A der Figur 1, in der insbesondere der nichtflüchtige Speicher in der Ventileinrichtung sowie zugehörige Sende- und Empfangseinheiten zur Kopplung mit Elementen in der Schankvorrichtung ersichtlich sind. Die Fig. 3 zeigt schematisch einen Teil eines zweiten Ausführungsbeispiels der Schankvorrichtung.

Die in Fig. 1 dargestellte Schankvorrichtung weist eine Flaschenhalterung 1 auf, in die die auf einer Flasche 3 vormontierte Ventileinrichtung 2 von oben einsetzbar ist, wobei die eingesetzte Flasche auf den Kopf gestellt ist. Die Flaschenhalterung 1 umgreift die Ventileinrichtung 2 im wesentlichen formschlüssig, wobei ein Flansch 4 der Ventileinrichtung 2 ein Durchrutschen der Flasche durch die Halterung 1 verhindert. Die Ventileinrichtung 2 enthält beispielsweise ein nicht dargestelltes Magnetventil, das durch eine in der Flaschenhalterung 1 integrierte Spule geöffnet bzw. geschlossen werden kann. Derartige Ventileinrichtungen sind an sich bekannt (beispielsweise aus DE-PS 25 48 442) und werden daher nicht näher beschrieben.

Während in Fig. 1 nur eine einzige Flasche in zwei verschiedenen Stellungen dargestellt ist, so ist in der Praxis doch daran gedacht, mehrere verschiedene Flaschen vorzusehen, die jeweils gleichartige Ventileinrichtungen vormontiert haben, womit man zu einem Schanksystem gelangt, bei dem die gewünschte Flasche einfach von oben mit dem Kopf nach unten in die Halterung 1 eingesetzt wird. Bei einer Schankvorrichtung, die zur wahlweisen Aufnahme verschiedener mit vormontierten Ventileinrichtungen versehenen Originalflaschen geeignet ist, ist nun erfindungsgemäß vorgesehen, daß die Flaschenhalterung 1 an eine Einrichtung 5, 6, 7, 8 zur Erfassung des Gewichtes der Flasche 3 samt enthaltenen Getränk angeschlossen ist. Beim gezeigten Ausführungsbeispiel ist ein auf einem Auflager 8 aufliegender, zweiarmiger Hebel 7 vorgesehen, an dessen einem Arm die Flaschenhalterung 1 angeordnet ist und an dessen anderen Arm ein Kraftsensor 5 angeordnet ist. Der Kraftsensor 5 kann beispielsweise ein piezoelektrisches Element sein, das über Leitungen 9 mit einer elektronischen Versorgungs- und Auswertschaltung 6 in Verbindung steht. Der zweiarmige Hebel 7 erlaubt eine stabile Flaschenhalterung und durch die schmale Bauweise eine leichte Unterbringung in einem Gehäuse 10. Über den Hebel 7 erfolgt die Übertragung der Gewichtskraft auf den Kraftsensor 5. Die Versorgungs- und Auswerteinrichtung 6 des Kraftsensors 5 liefert ein mit den Gewicht der Flasche samt enthaltenen Getränk korreliertes Signal an die eigentliche elektronische Steuereinrichtung 11. Die Steuereinrichtung 11 steht über eine der Übersichtlichkeithalber nicht dargestellte Leitung mit der Tastatur 12 in Verbindung, über die eine gewünschte Getränkeportion eingegeben werden kann bzw. zur Auswahl steht. Die elektronische Steuereinrichtung öffnet daraufhin über eine nicht dargestellte Leitung und eine Spule in der Flaschenhalterung 1 die Ventileinrichtung 2, bis das vom Kraftsensor 5 laufend erfaßte Gewicht der Flasche samt Inhalt gerade um jenen Betrag abgenommen hat, der der gewählten Getränkeportion entspricht. Es erfolgt also eine gewichtsabhängige bzw. gewichtsänderungsabhängige Ausgabe einer vorgewählten Getränkeportion aus der eingesetzten Flasche 3 in das Glas 13, wobei das Glas entweder auf der Auflage 14 aufstehen kann, wie dies in Fig. 1 dargestellt ist, oder mit der Hand ganz an die Zapfstelle 15 gehalten werden kann, was für die Zapfung von bestimmten Getränken von Vorteil ist. In jedem Fall erfolgt eine rasche und präzise Ausgabe einer bestimmten Getränkemenge.

Gemäß einem bevorzugten Merkmal der Erfindung ist vorgesehen, daß die Steuereinrichtung 11 durch eine laufende Relativwägung mit Zeitüberwachung die Gewichtsänderung pro Zeiteinheit des Flascheninhalts erfaßt und bei Feststellung eines außerhalb eines vordefinierbaren Bereiches liegenden Wertes für diese Gewichtsänderung pro Zeiteinheit ein Signal abgibt, wobei vorzugsweise eine akustische und/oder visuelle Anzeigeeinrichtung 16 vorgesehen ist, die in Abhängigkeit von diesem Signal angesteuert wird. Mit Hilfe eines Mikroprozessors in der Steuereinrichtung 1 läßt sich die beschriebene Überwachung der Gewichtsänderung pro Zeiteinheit für den Fachmann in relativ einfacher Weise realisieren. Zweck dieser Gewichtsüberwachung pro Zeiteinheit ist es einerseits verstopfte Ventileinrichtungen oder eine leere Flasche zu erkennen. In diesen beiden Fällen nimmt nämlich das Gewicht über einen bestimmten Zeitraum nicht oder zu wenig ab, was von der Steuereinrichtung erkannt werden kann. Über eine Anzeige 16 erfolgt dann ein entsprechender Hinweis an den Kellner oder die Kellnerin. Mit der Überwachung der Gewichtsänderung pro Zeiteinheit lassen sich auch Manipulationen an der Flasche während des Zapfvorganges feststellen, da auch in diesen Fällen die Gewichtsänderung pro Zeiteinheit von einem vorgegebenen Rahmen abweichen wird. Die Folge einer solchen Manipulation kann beispielsweise die Abschaltung der Anlage oder ein akustisches Warnsignal sein, welches nur vom Geschäftsführer aufgehoben werden kann.

Wie bereits erwähnt, kann über die verschwindende Gewichtsänderung pro Zeiteinheit (sieht man einmal von einer verstopften Ventileinrichtung ab) auch eine leere Flasche geschlossen werden. Um auch bei einem solchen Leerwerden einer Flasche während der noch nicht abgeschlossenen Zapfung dennoch eine präzise Ausgabe der gewünschten Getränkemenge vollziehen zu können, ist erfindungsgemäß eine Speichereinrichtung 17 vorgesehen, in die bei Feststellung einer leeren Flasche (Gewichtsänderung pro Zeiteinheit im wesentlichen gleich Null oder Erreichen eines vorbestimmten Leergewichts der Flasche) ein den bereits ausgegebenen Getränkegewicht entsprechender Wert abgespeichert wird. Nach Entfernen der leeren Flasche 3 aus der Halterung 1 kann eine volle Flasche desselben Getränkes in die Flaschenhalterung eingesetzt werden. Nachdem sich die Schankvorrichtung das bereits ausgegebene Getränkegewicht in der Speichereinrichtung 17 "gemerkt" hat, ist es für die Steuereinrichtung relativ einfach, nunmehr die Ausgabe des fehlenden Differenzgewichtes auf die gewünschte Menge durch Steuern der Ventileinrichtung 2 zu veranlassen. Alternativ oder zusätzlich zur oben beschriebenen Erfassung der Gewichtsänderung pro Zeiteinheit kann vorteilhaft vorgesehen sein, daß eine Leergewichts-Speichereinrichtung 18 vorgesehen ist, in der das Leergewicht einer oder mehrerer Flaschen eingespeichert ist, wobei die Steuereinrichtung 11 das tatsächlich erfaßte Gewicht laufend mit dem entsprechenden Leergewicht vergleicht und bei zumindest annähernder Übereinstimmung der beiden Gewichte ein Signal abgibt, welches vorzugsweise eine akustische oder visuelle Anzeige hervorruft.

Um ein vorzeitiges Herausnehmen der Flasche 3 aus der Halterung 1 zu verhindern, kann vorteilhaft vorgesehen sein, daß die Flaschenhalterung 1 einen von der Steuereinrichtung 11 gesteuerten, elektromagnetisch betätigten Riegel 19 aufweist, der in eine Öffnung 20 in der Ventileinrichtung 2 eingreifen kann. Im verriegelten Zustand ist dann ein Entfernen der Flasche aus der Flaschenhalterung 1 nicht möglich, um eine vollständige Gewichtsmessung zu ermöglichen.

Bei Getränken ist es bisher üblich gewesen, die gewünschte Getränkemenge in Volumseinheiten (z. B. 1/4 l Wein) anzugeben. Um eine solche übliche Eingabe auch bei der erfindungsgemäßen Einrichtung zu ermöglichen, die ja eigentlich Gewichtseinheiten erfaßt, ist eine zur Steuereinrichtung 11 gehörende Umrechnungseinheit 21 vorgesehen, mit der bei bekannter spezifischen Gewicht des Getränkes eine Umrechnung von über die Tastatur 12 eingegebenen Volumseinheiten in erfaßte Gewichtseinheiten durchführbar ist. Eine solche Umrechnungseinheit von Volumen auf Gewicht ist an sich bei Schankvorrichtungen bereits bekannt. Gegenüber der bekannten Umrechnungseinheit unterscheidet sich ein bevorzugtes Ausführungsbeispiel der erfindungsgemäßen Schankvorrichtung dadurch, daß die Eingabe der gewünschten Getränkemenge wahlweise zwischen einer Eingabe in Volumseinheiten und einer Eingabe direkt in Gewichtseinheiten umschaltbar ist. Zur Umschaltung kann eine einfache Umschalttaste bzw. Umschalthebel od. dgl. vorgesehen sein. Die direkte Eingabe der gewünschten Getränkemenge in Gewichtseinheiten ist vor allem bei der Herstellung von Mixgetränken wichtig, bei denen die Getränkebestandteile in der Rezeptur in Gewichtseinheiten, beispielsweise in Gramm eingegeben sind. Durch die erfindungsgemäße Umschaltmöglichkeit besteht aber auch die Möglichkeit die Getränke in der üblichen Weise in Volumseinheiten anzugeben.

Der Umrechnungseinheit 21 kann ein Speicher 22 zur Abspeicherung spezifischer Gewichte verschiedener Getränke zugeordnet sein. Alternativ könnten die spezifischen Gewichte auch in Speicher 23 abgespeichert werden, der in der Ventileinrichtung 2 vorgesehen sein kann und im folgenden noch näher beschrieben wird.

Gemäß einer bevorzugten Ausführungsform ist vorgesehen, daß die Steuereinrichtung 11 ein Einleseprogramm aufweist, das aus einem über die Eingabeeinrichtung 12 eingegebenen Volumswert und einem von der Gewichtserfassungseinrichtung 5, 6, 7, 8 erfaßten Gewichtswert, der der Gewichtsabnahme bei Ausgabe des genannten Volumswertes eines bestimmten Getränkes entspricht, automatisch das spezifische Gewicht dieses Getränkes ermittelt und im Speicher 22 oder 23 abspeichert. Mit Hilfe eines solchen Einleseprogrammes ist es auf einfache Weise und rasch möglich, das spezifische Gewicht einer Getränkesorte ein für alle Mal einzugeben.

Um es der Schankvorrichtung zu ermöglichen, automatisch die eingesetzte Flasche zu "erkennen", ist es bereits bekannt, auf der Ventileinrichtung jeder Flasche Kodierungen (Strichkodierungen oder aufgeklebte Streifen) vorzusehen, die dann von einer Leseeinrichtung im Bereich der Flaschenhalterung 1 erfaßbar sind. Die bekannten Kodierungen sind jedoch relativ unflexibel und müssen bei Verwendung einer Ventileinrichtung für eine allgemeine Getränkesorte aufwendig, beispielsweise durch Aufkleben einer neuen Strichkodierung verändert werden. Um die Handhabung eines Schanksystems mit einer Mehrzahl von kodierbaren Ventileinrichtungen zu vereinfachen, sieht eine bevorzugte Ausführungsform der Erfindung vor, daß jede Ventileinrichtung einen vorzugsweise nichtflüchtigen Speicher 23 aufweist, und daß im Bereich der Flaschenhalterung 1 eine vorzugsweise mit der Leseeinrichtung 24 kombinierte Schreibeinrichtung 25 angeordnet ist, über die flaschenspezifische Daten in den Speicher 23 der Ventileinrichtung 2 übertragbar sind. Der freiprogrammierbare Speicher ermöglicht es, daß alle kodierbaren Ventileinrichtungen Hardwaremäßig gleich aufgebaut sind und sich nur in der Programmierung des vorzugsweise nichtflüchtigen Speichers unterscheiden. Die Programmierung kann beispielsweise vom Geschäftsführer nach Eingabe eines Passwortes oder Schlüssels über die Tastatur erfolgen, wobei die vom Mikroprozessor in der Steuereinrichtung 11 aufbereiteten Daten über eine Schreibeinrichtung in den nichtflüchtigen Speicher 23 an der Flasche übertragen werden können.

Um allfällige Störungen durch das Magnetfeld der Spule in der Flaschenhalterung 1 zu vermeiden, welche die Ventileinrichtung 2 öffnet bzw. schließt, ist bevorzugt vorgesehen, daß der Speicher ein elektronischer Speicher 23 ist, wobei die Ventileinrichtung 2 eine mit dem Speicher 3 verbundene Sende- und Empfangseinheit 26, 27 aufweist, und wobei die Schreib- und Leseeinrichtung der Flaschenhalterung 1 eine korrespondierende Sende- und Empfangseinheit 25, 24 aufweist. Bei dem in Fig. 2 dargestellten Ausführungsbeispiel ist der nichtflüchtige Speicher ein EEPROM (23), das auf einer Platine 28 angeschlossen ist. Die Sende- und Empfangseinheiten 24 - 27 sind lichtemittierende bzw. lichtempfindliche Bauelemente zur optischen Datenübertragung. Im einzelnen ist eine Sendediode 25 vorgesehen, mit der Daten an die Empfangsdiode 27 übertragbar sind (Programmieren bzw. Beschreiben des EEPROM's). Weiters ist eine Infrarotsendediode 26 vorgesehen, um Daten aus den EEPROM 23 zur Empfangsdiode 24 und von dort über den Datenbus 29 in die zentrale elektronische Steuereinrichtung zu übertragen. Zur Montage der Bauelemente auf der Flaschenhalterungs-Seite ist eine Platine 30 vorgesehen. Über die Sendediode 31 und die Empfangsdiode 32 ist es möglich, einen Taktsignal zu übertragen, das die Einspeicherung von Daten Bit für Bit in das EEPROM 23 steuert.

Um Batterien od. dgl. in der Ventileinrichtung 2 zu vermeiden, kann vorgesehen sein, daß im Bereich der Flaschenhalterung 1 und in der Ventileinrichtung 2 korrespondierende Teile einer Einrichtung zur vorzugsweise berührungslosen Stromversorgung der Sende- und Empfangseinheit 26, 27 und gegebenenfalls weitere Komponenten 13, 32 in der Ventileinrichtung vorgesehen sind. Im folgenden Fall erfolgt die Stromversorgung über eine induktive Kopplung, wobei die Primärseite 32 in der Flaschenhalterung 1 und die Sekundärseite 33 in der Ventileinrichtung 2 vorgesehen ist.

Der freiprogrammierbare Speicher 23 in den Ventileinrichtungen 2 der einzelnen Flaschen erlaubt es nicht nur Daten zu speichern, die die in der Flasche enthaltene Getränkesorte als solche angeben, sondern auch weitere flaschenspezifische Daten. Beispielsweise ist es möglich, das spezifische Gewicht des darin enthaltenen Getränkes, das Leergewicht der Flasche aber auch sich im Laufe der Zapfung verändernde Daten abzuspeichern. Beispielsweise ist es gemäß einer bevorzugten Ausführungsform der Erfindung möglich, daß die Steuereinrichtung nach jeder Zapfung das Endgewicht von Flasche 3 samt enthaltenem Getränk in einem Speicher, vorzugsweise in den nichtflüchtigen Speicher 23 in der Ventileinrichtung 2 der Flasche 3 einspeichert und bei erneutem Einsetzen der Flasche 3 in die Flaschenhalterung 1 automatisch überprüft, ob das erfaßte Gewicht mit dem gespeicherten Endgewicht nach der letzten Zapfung übereinstimmt. Damit läßt sich leicht feststellen, ob zwischen zwei Zapfungen unbefugt ein Getränk aus der Flasche entnommen worden ist. Es ist auch denkbar, daß bei einem Leerwerden der Flasche, eine entsprechende Information im Speicher der Ventileinrichtung automatisch abgespeichert wird. Damit ist die Ventileinrichtung vorerst "entwertet" und kann erst dann zur Zapfung eines weiteren Getränkes verwendet werden, wenn eine berechtigte Person (Geschäftsführer) den Speicherplatz "Flasche leer" wieder umprogrammiert hat. Mißbrauch durch unberechtigtes Aufsetzen von Ventileinrichtungen leerer Flaschen auf volle Flaschen kann damit vermieden werden.

Bei dem schematisch in Fig. 3 dargestellten Ausführungsbeispiel erfolgt die Messung des Gewichtes der in die Halterung 1 einzusetzenden Flasche samt deren Inhalt durch Dehnungsmeßstreifen 40, die an der Ober- und Unterseite eines stabförmigen Teiles 7' ober- und unterhalb einer Ausnehmung 41 in demselben angebracht sind. Die Dehnungsmeßstreifen 40 stehen über Leitungen 42 mit der zentralen Steuereinrichtung 11 zur Verfügung. Aus den von den Dehnungsmeßstreifen 40 erfaßten Deformationen des stabförmigen Teiles 7', welche durch das Flaschengewicht hervorgerufen wurden, läßt sich auf das Flaschengewicht präzise schließen.

Die Erfindung ist selbstverständlich nicht auf die dargestellten Ausführungsbeispiele beschränkt. Beispielsweise ist es möglich, daß die Schankvorrichtung mehrere nebeneinanderliegende Flaschenhalterungen aufweist, die von gesonderten oder einer gemeinsamen Steuereinrichtung verwaltet werden können. Als nichtflüchtige Speicher in den Ventileinrichtungen eignen sich neben den genannten EEPROM's auch magnetische Datenträger, beispielsweise Magnetstreifen.

Auch der Aufbau der Gewichtserfassungs-Einrichtung kann von dem dargestellten Hebel samt Kraftsensor abweichen. Beispielsweise ist es möglich, einen oder mehrere Kraftsensoren in die Flaschenhalterung zu integrieren. Drei Piezosensoren, auf denen die eingesetzte Ventileinrichtung aufliegt, könnten zur Erfassung des Flaschengewichts herausgezogen werden.

## Patentansprüche

1. Schankvorrichtung zur portionierten Ausgabe von Getränken aus wenigstens einer Flasche, deren Öffnung mit einer im Bereich des Flaschenhalses vormontierten Ventileinrichtung versehen ist, mit mindestens einer Flaschenhalterung zur Aufnahme einer auf den Kopf gestellten Flasche bzw. der Ventileinrichtung derselben, dadurch gekennzeichnet, daß die Flaschenhalterung (1) an eine Einrichtung (5, 6, 7, 8) zur Erfassung des Gewichts der Flasche (3) samt enthaltenem Getränk angeschlossen ist, und daß eine mit dieser Einrichtung verbundene, elektronische Steuereinrichtung (11) vorgesehen ist, die die Ventileinrichtung (2) zur Ausgabe einer beispielsweise über eine Tastatur (12) gewählten Getränkeportion aus der Flasche (3) in Abhängigkeit vom erfaßten Gewicht bzw. von der Gewichtsänderung der Flasche (3) samt enthaltenem Getränk steuert, wobei eine Speichereinrichtung (17) vorgesehen ist, in die bei Feststellung einer leeren Flasche ein dem bereits ausgegebenen Getränkegewicht entsprechender Wert und gegebenenfalls ein der gewünschten Getränkemenge entsprechenden Wert abgespeichert werden.

2. Schankvorrichtung nach Anspruch 1, dadurch gekennzeichnet, daß die Flaschenhalterung (1) an einem vorzugsweise in einem Gehäuse (10) untergebrachten Hebel (7) angeordnet ist, und daß an diesem Hebel ein Kraftsensor (5), beispielsweise ein piezoelektrischer Sensor zur Erfassung einer vom Flaschengewicht hervorgerufenen Kraft auf den Hebel (7) vorgesehen ist.

3. Schankvorrichtung nach Anspruch 2, dadurch gekennzeichnet, daß der Hebel (7) zweiarmig ist, wobei an einem Arm die Flaschenhalterung (1) und am anderen Arm der Kraftsensor (5) angeordnet ist.

4. Schankvorrichtung nach einem der Ansprüche 1 bis 3, dadurch gekennzeichnet, daß die Steuereinrichtung (11) durch eine laufende Relativwägung mit Zeitüberwachung die Gewichtsänderung pro Zeiteinheit des Flascheninhalts erfaßt und bei Feststellung eines außerhalb eines vordefinierbaren Bereiches liegenden Wertes für diese Gewichtsänderung pro Zeiteinheit ein Signal abgibt, wobei vorzugsweise eine akustische und/oder visuelle Anzeigeeinrichtung (16) vorgesehen ist, die in Abhängigkeit von diesem Signal angesteuert wird.

5. Schankvorrichtung nach Anspruch 1, dadurch gekennzeichnet, daß die Steuereinrichtung (11) nach Entfernen einer leeren oder verstopften Flasche (3) und Einsetzen einer gefüllten Flasche desselben Getränkes in die Flaschenhalterung (1) durch Steuern der Ventileinrichtung (2) die Ausgabe des Differenzgewichtes zwischen der gewünschten Menge und der bereits ausgegebenen Menge steuert.

6. Schankvorrichtung nach einem der Ansprüche 1 bis 5, dadurch gekennzeichnet, daß eine Leergewichts-Speichereinrichtung (18) vorgesehen ist, in der das Leergewicht einer oder mehrerer Flaschen eingespeichert ist, wobei die Steuereinrichtung (11) das tatsächlich erfaßte Gewicht laufend mit dem entsprechenden Leergewicht vergleicht und bei zumindest annähernder Übereinstimmung der beiden Gewichte ein Signal abgibt, welches vorzugsweise eine akustische oder visuelle Anzeige hervorruft.

7. Schankvorrichtung nach einem der Ansprüche 1 bis 6, dadurch gekennzeichnet, daß die Flaschenhalterung (1) eine von der Steuereinheit (11) gesteuerte, vorzugsweise elektromagnetisch betätigte Verriegelungsvorrichtung (10) aufweist, die an der Flasche (3) bzw. deren Ventileinrichtung (2) angreift und in verriegeltem Zustand ein Entfernen der Flasche (3) aus der Flaschenhalterung (1) verhindert, bevor eine Gewichtsmessung abgeschlossen ist.

8. Schankvorrichtung nach einem der Ansprüche 1 bis 7, mit einer Eingabeeinrichtung, vorzugsweise Tastatur (12), zur Eingabe der gewünschten auszugebenden Getränkemenge an die Steuereinrichtung (11), wobei die Steuereinrichtung (11) eine Umrechnungseinheit (21) aufweist, mit der bei bekanntem spezifischen Gewicht des Getränkes eine Umrechnung von eingegebenen Volumseinheiten in erfaßte Gewichtseinheiten durchführbar ist, dadurch gekennzeichnet, daß die Eingabe der gewünschten Getränkemenge wahlweise zwischen einer Eingabe in Volumseinheiten und einer Eingabe direkt in Gewichtseinheiten umschaltbar ist.

9. Schankvorrichtung nach einem der Ansprüche 1 bis 7, mit einer Eingabeeinrichtung, vorzugsweise Tastatur (12), zur Eingabe der gewünschten auszugebenden Getränkemenge an die Steuereinrichtung (11), wobei die Steuereinrichtung (11) eine Umrechnungseinheit (21) aufweist, mit der bei bekanntem spezifischen Gewicht des Getränkes eine Umrechnung von eingegebenen Volumseinheiten in erfaßte Gewichtseinheiten durchführbar ist, dadurch gekennzeichnet, daß der Umrechnungseinheit (21) ein Speicher (22 oder 23) zur Abspeicherung spezifischer Gewichte von Getränken zugeordnet ist.

10. Schankvorrichtung nach Anspruch 9, dadurch gekennzeichnet, daß die Steuereinrichtung (11) ein Einleseprogramm aufweist, das aus einem über die Eingabeeinrichtung (12) eingegebenen Volumswert und einem von der Gewichtserfassungseinrichtung (5, 6, 7, 8) erfaßten Gewichtswert, der der Gewichtsabnahme bei Ausgabe des genannten Volumswertes eines bestimmten Getränkes entspricht, automatisch das spezifische Gewicht dieses Getränkes ermittelt und im Speicher (22 oder 23) abspeichert.

11. Schanksystem, mit einer Schankvorrichtung nach einem der Ansprüche 1 bis 10 und mit einer Mehrzahl von kodierbaren Ventileinrichtungen (2), die auf Flaschen (3) vormontierbar und samt der auf den Kopf gestellten Flasche (3) jeweils in die Flaschenhalterung (1) der Schankvorrichtung einsetzbar sind, wobei im Bereich der Flaschenhalterung (1) eine Leseeinrichtung für die kodierbare Ventileinrichtung (2) vorgesehen ist, dadurch gekennzeichnet, daß jede Ventileinrichtung einen vorzugsweise nichtflüchtigen Speicher (23) aufweist, und daß im Bereich der Flaschenhalterung (1) eine vorzugsweise mit der Leseeinrichtung (24) kombinierte Schreibeinrichtung (25) angeordnet ist, über die flaschenspezifische Daten in den Speicher (23) der Ventileinrichtung (2) übertragbar sind.

12. Schankvorrichtung nach Anspruch 11, dadurch gekennzeichnet, daß der Speicher ein elektronischer Speicher (23) ist, daß die Ventileinrichtung eine mit dem Speicher verbundene Sende- und Empfangseinheit aufweist, und daß die Schreib- und Leseeinrichtung der Flaschenhalterung eine Sende- und Empfangseinheit aufweist, die mit der Ventileinrichtung kommuniziert.

13. Schanksystem nach Anspruch 12, dadurch gekennzeichnet, daß der nichtflüchtige Speicher ein EEPROM (23) ist.

14. Schankvorrichtung nach Anspruch 12 oder 13, dadurch gekennzeichnet, daß im Bereich der Flaschenhalterung (1) und in der Ventileinrichtung (2) korrespondierende Teile einer Einrichtung zur vorzugsweise berührungslosen Stromversorgung der Sende- und Empfangseinheit (26, 27) und gegebenenfalls weitere Komponenten (13, 32) in der Ventileinrichtung vorgesehen sind.

15. Schankvorrichtung nach einem der Ansprüche 12 bis 14, dadurch gekennzeichnet, daß die Sende- und Empfangseinheiten lichtemittierende (26, 25) und lichtempfindliche (24, 27) Bauelemente zur optischen Übertragung, insbesondere gegenüberliegende Leuchtdioden und Empfangsdioden, aufweisen.

16. Schankvorrichtung nach einem der Ansprüche 11 bis 15, dadurch gekennzeichnet, daß die Steuereinrichtung nach jeder Zapfung das Endgewicht von Flasche (3) samt enthaltenem Getränk in einem Speicher, vorzugsweise in den nichtflüchtigen Speicher (23) in der Ventileinrichtung (2) der Flasche (3) einspeichert und bei erneutem Einsetzen der Flasche (3) in die Flaschenhalterung (1) automatisch überprüft, ob das erfaßte Gewicht mit dem gespeicherten Endgewicht nach der letzten Zapfung übereinstimmt.

17. Schankvorrichtung nach einem der Ansprüche 1 bis 16, dadurch gekennzeichnet, daß die Einrichtung zur Erfassung des Gewichtes der Flasche 3 zumindest ein Element (40) umfaßt, das die durch das Gewicht der Flasche hervorgerufene Deformation eines mit der Flaschenhalterung (1) in Verbindung stehenden Teiles (7') bzw. der Flaschenhalterung selbst erfaßt.

18. Schankvorrichtung nach Anspruch 17, dadurch gekennzeichnet, daß das zumindest eine Element ein Dehnungsmeßstreifen ist.

19. Schankvorrichtung nach Anspruch 18, dadurch gekennzeichnet, daß zumindest ein Dehnungsmeßstreifen auf einem stabförmigen Teil (7') angeordnet ist, an dessen freiem Ende die Flaschenhalterung (1) angeordnet ist.

## Claims

1. A device for dispensing metered quantities of beverages from at least one bottle, the opening of which is provided with a valve device pre-fitted in the area of the bottle neck, comprising at least one bottle holder to receive an inverted bottle or the valve device, characterised in that the bottle holder (1) is connected to a means (5, 6, 7, 8) for determining the weight of the bottle (3) together with the beverage contained therein, and in that an electronic control device (11) is provided which is connected to said means and which controls the valve device (2) to dispense a quantity of beverage from the bottle (3), such quantity being selected, for example, by way of a keyboard (12), in dependence on the detected weight or in dependence on the change of weight of the bottle (3) together with the beverage contained therein, memory means (17) being provided in which, when an empty bottle is detected, a value corresponding to the weight of beverage already dispensed and, if required, a value corresponding to the required quantity of beverage, are stored.

2. A dispensing device according to claim 1, characterised in that the bottle holder (1) is disposed on a lever (7) preferably accommodated in a housing (10), and in that a force sensor (5), e.g. a piezoelectric sensor, is provided on said lever to detect a force on the lever (7) due to the bottle weight.

3. A dispensing device according to claim 2, characterised in that the lever (7) is a two-armed lever, the bottle holder (1) being disposed on one arm and the force sensor (5) on the other arm.

4. A dispensing device according to any one of claims 1 to 3, characterised in that the control device (11) detects the change of weight of the bottle contents per unit of time by continuous relative weighing with time monitoring, and delivers a signal on detection of a value of said change of weight per unit of time outside a predefinable range, an acoustic indication or visual display means (16) preferably being provided, which is triggered in dependence on said signal.

5. A dispensing device according to claim 1, characterised in that after removal of an empty or clogged bottle (3) and the insertion of a full bottle of the same beverage in the bottle holder (1) the control device (11), by controlling the valve device (2), controls the dispensing of the differential weight between the required quantity and the quantity already dispensed.

6. A dispensing device according to any one of claims 1 to 5, characterised in that an empty weight memory device (18) is provided, in which the empty weight of one or more bottles is stored, the control device (11) continuously comparing the actual height detected with the corresponding empty weight and, if the two weights correspond at least approximately, delivering a signal which preferably triggers an acoustic indication or visual display.

7. A dispensing device according to any one of claims 1 to 6, characterised in that the bottle holder (1) comprises a locking mechanism (10) controlled by the control unit (11) and preferably electromagnetically actuated, such mechanism engaging the bottle (3) or its valve device (2) and, in the locked state, preventing removal of the bottle (3) from the bottle holder (1) before conclusion of a weight measurement.

8. A dispensing device according to any one of claims 1 to 7, comprising an inputting means, preferably a keyboard (12), for inputting the required quantity of beverage for dispensing to the control device (11), the latter comprising a conversion unit (21) by means of which, if the unit weight of the beverage is known, it is possible to convert input volume units into detected weight units, characterised in that the inputting of the required quantity of beverage can be selectively switched between inputting in volume units and inputting directly in weight units.

9. A dispensing device according to any one of claims 1 to 7, comprising an inputting means, preferably a keyboard (12), for inputting the required quantity of beverage for dispensing to the control device (11), the latter comprising a conversion unit (21) by means of which, if the unit weight of the beverage is known, it is possible to convert input volume units into detected weight units, characterised in that the conversion unit (21) has an associated memory (22 or 23) for storing unit weights of beverages.

10. A dispensing device according to claim 9, characterised in that the control device (11) has a read-in program which automatically detects the unit weight of a specific beverage and stores it in the memory (22 or 23) from a volumetric value input via the inputting device (12) and a weight value detected by the weight detection means (5, 6, 7, 8), such weight value corresponding to the reduction in weight on the dispensing of the said volumetric value of said specific drink.

11. A dispensing system, comprising a dispensing device according to any one of claims 1 to 10 and with a plurality of codeable valve devices (2) pre-fittable on bottles (3) and insertable, together with the inverted bottle (3), in the bottle holder (1) of the dispensing device, a reader for the codeable valve device (2) being provided in the area of the bottle holder (1), characterised in that each valve device comprises a preferably non-volatile memory (23) and in that a write means (25) preferably combined with the reader (24) is disposed in the area of the bottle holder (1), the bottle-specific data being transferrable via said write means (25) to the memory (23) of the valve device (2).

12. A dispensing device according to claim 11, characterised in that the memory is an electronic memory (23), in that the valve device comprises a transmission and reception unit connected to the memory, and in that the write and read means of the bottle holder comprises a transmission and reception unit communicating with the valve device.

13. A dispensing system according to claim 12, characterised in that the non-volatile memory is an EEPROM (23).

14. A dispensing device according to claim 12 or 13, characterised in that corresponding parts of a device for preferably contactless power supply for the transmission and reception unit (26, 27) are provided in the area of the bottle holder (1) and in the valve device (2) and if required other components (13, 32) are provided in the valve device.

15. A dispensing device according to any one of claims 12 to 14, characterised in that the transmission and reception units comprise light-emitting (26, 25) and light-sensitive (24, 27) components for optical transmission, more particularly opposite LED's and reception diodes.

16. A dispensing device according to any one of claims 11 to 15, characterised in that after each dispensing operation the control device stores the end weight of the bottle (3) together with the beverage contained therein in a memory, preferably the non-volatile memory (23) in the valve device (2) of the bottle (3) and when the bottle (3) is re-inserted in the bottle holder (1) automatically checks whether the weight detected corresponds to the stored end weight after the last dispensing operation.

17. A dispensing device according to any one of claims 1 to 16, characterised in that the device for detecting the weight of the bottle (3) comprises at least one element (40) which detects the deformation, produced by the weight of the bottle, of a part (7') connected to the bottle holder (1), or of the bottle holder itself.

18. A dispensing device according to claim 17, characterised in that the said at least one element is a strain gauge.

19. A dispensing device according to claim 18, characterised in that at least one strain gauge is disposed on a part (7') in the form of a bar, at the free end of which the bottle holder (1) is disposed.

## Revendications

1. Dispositif de distribution dosée de boissons à partir d'au moins une bouteille dont l'ouverture est pourvue d'un dispositif de soupape pré-monté dans la zone du goulot, comportant au moins un support de bouteille destiné à recevoir une bouteille placée la tête en bas ou le dispositif de soupape de celle-ci, caractérisé en ce que le support de bouteille (1) est raccordé à un dispositif (5, 6, 7, 8) destiné à enregistrer le poids de la bouteille (3) et de la boisson contenue, et en ce qu'il est prévu, relié à ce dispositif, un dispositif de commande électronique (11) qui commande le dispositif de soupape (2) en vue du déversement, à partir de la bouteille (3), d'une dose de boisson sélectionnée par exemple par l'intermédiaire d'un clavier (12), en fonction du poids enregistré ou de la variation de poids de la bouteille (3) et de la boisson contenue, étant précisé qu'il est prévu un dispositif de mémoire (17) dans lequel sont mémorisées, lorsqu'une bouteille vide est décelée, une valeur correspondant au poids de boisson déjà versé et éventuellement une valeur correspondant à la quantité de boisson souhaitée.

2. Dispositif de distribution de boissons selon la revendication 1, caractérisé en ce que le support de bouteille (1) est disposé sur un levier (7) logé de préférence dans un boitier (10), et en ce qu'il est prévu, sur ce levier, un capteur de force (5), par exemple un capteur piézoélectrique, destiné à enregistrer une force exercée par le poids de la bouteille sur le levier (7).

3. Dispositif de distribution de boissons selon la revendication 2, caractérisé en ce que le levier (7) a deux bras, le support de bouteille (1) étant disposé sur un bras et le capteur de force (5) sur l'autre bras.

4. Dispositif de distribution de boissons selon l'une des revendications 1 à 3, caractérisé en ce que le dispositif de commande (11) enregistre, grâce à un pesage relatif constant avec une horloge de surveillance, la variation de poids du contenu de la bouteille par unité de temps et, s'il décèle une valeur située en dehors d'une plage apte à être prédéfinie, émet pour cette variation de poids par unité de temps un signal, étant précisé qu'il est prévu de préférence un dispositif de signalisation acoustique et/ou visuelle (16) qui est déclenché en fonction de ce signal.

5. Dispositif de distribution de boissons selon la revendication 1, caractérisé en ce que le dispositif de commande (11), une fois qu'une bouteille (3) vide ou bouchée a été enlevée et qu'une bouteille pleine de la même boisson a été placée dans le support de bouteille, commande grâce à la commande du dispositif de soupape (2) le déversement de la différence de poids entre la quantité souhaitée et la quantité déjà versée.

6. Dispositif de distribution de boissons selon l'une des revendications 1 à 5, caractérisé en ce qu'il est prévu un dispositif de mémorisation de poids à vide (18) dans lequel le poids à vide d'une ou plusieurs bouteilles est mémorisé, étant précisé que le dispositif de commande (11) compare en permanence le poids réellement enregistré avec le poids à vide correspondant et, au cas où les deux poids coïncident au moins approximativement, émet un signal qui provoque de préférence une signalisation acoustique ou visuelle.

7. Dispositif de distribution de boissons selon l'une des revendications 1 à 6, caractérisé en ce que le support de bouteille (1) comporte un dispositif de verrouillage (10), actionné par l'unité de commande (11) de préférence par voie électromagnétique, qui agit au niveau de la bouteille (3) ou du dispositif de soupape (2) de celle-ci et qui empêche, à l'état verrouillé, que la bouteille (3) soit enlevée du support de bouteille (1) avant qu'une mesure de poids ne soit achevée.

8. Dispositif de distribution de boissons selon l'une des revendications 1 à 7, comportant un dispositif d'entrée, de préférence un clavier (12), pour entrer dans le dispositif de commande (11) la quantité de boisson à verser souhaitée, étant précisé que le dispositif de commande (11) comprend une unité de conversion (21) à l'aide de laquelle, en présence d'un poids spécifique connu de la boisson, des unités de volume entrées peuvent être converties en unités de poids enregistrées, caractérisé en ce que l'entrée de la quantité de boisson souhaitée peut passer au choix d'une entrée en unités de volume à une entrée directement en unités de poids.

9. Dispositif de distribution de boissons selon l'une des revendications 1 à 7, comportant un dispositif d'entrée, de préférence un clavier (12), pour entrer dans le dispositif de commande (11) la quantité de boisson à verser souhaitée, étant précisé que le dispositif de commande (11) comprend une unité de conversion (21) à l'aide de laquelle des unités de volume entrées peuvent être converties en unités de poids enregistrées, en présence d'un poids spécifique connu de la boisson, caractérisé en ce qu'il est prévu, associée à l'unité de conversion (21), une mémoire (22 ou 23) destinée à stocker des poids spécifiques de boissons.

10. Dispositif de distribution de boissons selon la revendication 9, caractérisé en ce que le dispositif de commande (11) comporte un programme de mise en mémoire qui, à partir d'une valeur de volume entrée par l'intermédiaire du dispositif d'entrée (12) et d'une valeur de poids enregistrée par le dispositif d'enregistrement de poids (5, 6, 7, 8) et correspondant à la diminution de poids lors du déversement de ladite valeur de volume d'une boisson définie, calcule automatiquement le poids spécifique de cette boisson et le stocke dans la mémoire (22 ou 23).

11. Système de distribution de boissons comportant un dispositif de distribution selon l'une des revendications 1 à 10 et une multiplicité de dispositifs de soupapes (2) aptes à être codés qui sont aptes à être pré-montés sur les bouteilles (3) et à être introduits, avec la bouteille (3) mise la tête en bas, dans le support de bouteille (1) du dispositif de distribution de boissons, étant précisé qu'il est prévu, dans la zone du support du bouteille (1), un dispositif de lecture pour le dispositif de soupape (2) apte à être codé, caractérisé en ce que chaque dispositif de soupape comporte une mémoire (23) de préférence non volatile, et en ce qu'il est prévu, dans la zone du support de bouteille (1), un dispositif d'écriture (25) combiné de préférence avec le dispositif de lecture (24), par l'intermédiaire duquel les données spécifiques concernant la bouteille peuvent être transmises dans la mémoire (23) du dispositif de soupape (2).

12. Dispositif de distribution de boissons selon la revendication 11, caractérisé en ce que la mémoire est une mémoire électronique (23), en ce que le dispositif de soupape comporte une unité d'émission et de réception reliée à la mémoire, et en ce que le dispositif d'écriture et de lecture du support de bouteille comporte une unité d'émission et de réception qui communique avec le dispositif de soupape.

13. Système de distribution de boissons selon la revendication 12, caractérisé en ce que la mémoire non volatile est une EEPROM (23).

14. Dispositif de distribution de boissons selon la revendication 12 ou 13, caractérisé en ce qu'il est prévu, dans la zone du support de bouteille (1) et dans le dispositif de soupape (2), des éléments correspondants d'un dispositif prévu pour l'alimentation électrique de préférence sans contact de l'unité d'émission et de réception (26, 27), et éventuellement d'autres composants (13, 32) dans le dispositif de soupape.

15. Dispositif de distribution de boissons selon l'une des revendications 12 à 14, caractérisé en ce que les unités d'émission et de réception comportent des éléments électroluminescents (26, 25) et photosensibles (24, 27) pour la transmission optique, de préférence des diodes électroluminescentes et des diodes réceptrices opposées.

16. Dispositif de distribution de boissons selon l'une des revendications 11 à 15, caractérisé en ce que le dispositif de commande, après chaque distribution, introduit le poids final de la bouteille (3) et de la boisson contenue dans une mémoire, de préférence dans la mémoire non volatile (23) prévue dans le dispositif de soupape (2) de la bouteille (3), et vérifie automatiquement, lors de la nouvelle mise en place de la bouteille (3) dans le support de bouteille (1), si le poids enregistré coïncide avec le poids final mis en mémoire après la dernière distribution.

17. Dispositif de distribution de boissons selon l'une des revendications 1 à 16, caractérisé en ce que le dispositif prévu pour enregistrer le poids de la bouteille 3 comprend au moins un élément (40) qui enregistre la déformation d'un élément (7') relié au support de bouteille (1) ou du support de bouteille lui-même, causée par le poids de la bouteille.

18. Dispositif de distribution de boissons selon la revendication 17, caractérisé en ce que le ou les éléments sont des jauges d'allongement.

19. Dispositif de distribution de boissons selon la revendication 18, caractérisé en ce qu'au moins une jauge d'allongement est disposée sur un élément en forme de barre (7') à l'extrémité duquel est disposé le support de bouteille (1).
